# EUROPEAN PATENT SPECIFICATION

(11) **EP 4 046 482 B1**
(45) Date of publication and mention of the grant of the patent: **09.04.2025**
(21) Application number: 22156646.6
(22) Date of filing: 14.02.2022
(51) Int. Cl.: A01K 1/015

(54) **FLOOR SYSTEM FOR AN ANIMAL SHED**
BODENSYSTEM FÜR EINEN STALL
SYSTÈME DE SOL POUR UNE ÉTABLE

(30) Priority: 17.02.2021 NL 2027577
(43) Date of publication of application: 24.08.2022
(73) Proprietor: Lely Patent N.V., 3147 PB Maassluis (NL)
(72) Inventor: BLOKLAND, Korstiaan Cornelis, 3147 PB Maassluis (NL)
(74) Representative: Octrooibureau Van der Lely N.V.

(56) References cited:
- WO-A1-2009/136376
- WO-A1-2018/096059
- WO-A1-2019/156551
- GB-A- 2 500 682
- NL-B1- 2 015 454
- NL-B1- 2 015 454

## Description

### FIELD OF THE INVENTION

The invention relates to a floor for an animal shed, wherein the floor separates urine and faeces. In addition, the invention relates to an animal shed with such a floor and an animal shed system comprising such an animal shed or such a floor system.

### BACKGROUND OF THE INVENTION

Traditionally, livestock is held in an animal room on a slatted floor with slot-shaped grid openings which open into a manure cellar situated underneath. Characteristic of such floors is the fact that the width of the grid opening remains the same in a downward direction or increases along the depth. Faeces and urine drop through the grid openings and end up in the manure cellar which serves to store the mixture of urine and faeces, the so-called manure or slurry. This manure contains all the manure components, such as phosphates, fibres and nitrogen. The reaction of urine with faeces produces ammonia that enters the animal shed via the grid openings and finally evaporates to the environment where it has a harmful effect.

In view of regulations and environmental protection, it is desirable to fertilize with individual fertilizer components. Separating slurry into separate manure components is difficult and expensive.

It is known that an animal-shed floor with perforations allows urine to pass through to a space situated underneath. Air containing ammonia and situated above the urine is sucked out and passed through an air scrubber. The aim is to evaporate and remove all the ammonia from the urine in this way. The faeces remain behind on top of the floor. The floor with perforations has the drawback that the holes become relatively easily blocked by the faeces and other dirt. Faeces spread across the floor or other dirt usually easily block the perforations in a traditional concrete animal floor. Enlarging these perforations is not advantageous, due to an increased risk of injury to the animals resulting from sprains or fractures of a leg due to missteps in such a perforation.

Patent publication NL2018338 discloses a slatted floor with a walking surface and at least one slot-shaped grid opening which opens into a manure cellar, and in which a slot element is provided in the grid opening in order to reduce the size of the opening of the slot. The slot element consists of a profile that fits into the grid opening and one or more holes through which urine can pass. However, slatted floors do not have standardised slot sizes, so that a slot element has to be made to measure for every slot individually. In addition, the number of grid openings to be provided with such a slot element is very large due to the dimensions of an animal-shed floor, as a result of which this is very labour-intensive work. In addition, the profiles adversely affect the safety of the slatted floor to walk on as the grip of the walking surface decreases.

It would therefore be desirable to provide an animal-shed floor which at least mitigates some of the drawbacks known from the prior art.

NL2015454 discloses a floor element for a stable. The floor element can be a floor mat, which can be placed on a floor of a stable. The floor can be any stable floor, for example a stable floor to be renovated or a new stable floor. The stable feed can be provided with openings to a manure cellar located under the stable floor. The floor element can be used for any suitable type of animal, for example for cattle or pigs.

### SUMMARY OF THE INVENTION

It is an object of the invention to provide an animal-shed floor comprising an assembly of:
- a slatted floor with a first floor surface and an opposite second floor surface, wherein the second floor surface faces a manure reservoir situated underneath, and with a plurality of slot-shaped grid openings which open towards the manure reservoir situated underneath; and
- an elastic floor top layer with a first surface and an opposite second surface spaced apart, wherein the first surface is a walking surface for animals and the second surface faces the first floor surface,
   wherein the elastic floor top layer furthermore comprises a plurality of slot-shaped openings which extend from the first to the second surface, and open towards the slot-shaped grid openings, wherein a slot element is provided in the slot-shaped openings, wherein a top surface of the slot element is provided with through-holes which are relatively small compared to the grid openings and the slot-shaped openings of the elastic floor top layer, so that urine flows through the through-holes to the manure reservoir and faeces remain behind on the first surface when the animal-shed floor is in use,
   wherein the slot element comprises a U profile with side legs that are downwardly directed from the top surface at opposite ends of the top surface, wherein a flange is provided on each of the side legs and the flanges face away from each other, in such a manner that each flange is situated between the elastic floor top layer and the slatted floor.

Slatted floors with an elastic floor top layer are known, for example from European patent publication EP2936977. A drawback of such composite animal-shed floors is that both urine and faeces drop through the slot-shaped openings, or slot openings, and the grid openings into the manure cellar situated underneath. The invention aims to overcome this drawback by means of the slot element.

Under the animal-shed floor, a manure reservoir is provided for storing manure, urine and/or a mixture thereof, referred to as slurry, such as a manure cellar. The through-holes of the slot element open into the reservoir when the animal-shed floor is in use. The slot element has a plurality of through-holes which form perforations, so that a perforated floor is achieved. The perforations or through-holes have dimensions which ensure that urine can flow through the slot element and into the reservoir situated underneath, when the animal shed is in use, that is to say when animals are being kept in the animal shed. Because the through-hole is relatively narrow compared to the grid opening and the slot opening, there is only a narrow fluid connection from the animal space to the reservoir or manure cellar situated underneath. The through-holes in the slot element open towards the manure reservoir. The urine flows from the animal-shed floor directly into the manure reservoir via the holes.
Vapours such as ammonia largely remain in the reservoir. In addition, the openings in the slot element have dimensions such that faeces cannot easily drop into the reservoir. The main portion of the faeces remains on the animal-shed floor and may be removed separately from the urine. The faeces may be removed by means of a manure-removing device, for example a manure robot or a manure slide.

In addition, the through-holes, which form the perforations, may form a flow regulator to regulate an air flow from the animal shed to the reservoir, so that any ammonia formed on the floor of the animal shed is sucked into the reservoir, thus lowering the ammonia concentration in the animal shed and reducing the smell in the animal shed.

The floor top layer is provided on the slatted floor, so that an upper surface of the floor top layer forms the walking surface on which the animals, such as cows, walk in the animal shed. The slatted floor preferably comprises a concrete slatted floor of, for example, reinforced concrete. Concrete is the most popular material for slatted animal-shed floors, but other suitable materials may also be used. The upper surface of the floor top layer, i.e. the walking surface, and the top surface of the slot element together form the walking surface of the animal-shed floor. Preferably, the floor top layer is made of a resilient material, in particular an elastomer, such as a rubber or a thermoplastic elastomer. The advantage of a resilient material is that the floor top layer can be compressed by the weight of the animals walking on the floor top layer and can subsequently released again. The floor top layer may also be made of other materials, as long as the floor top layer is elastic, or in other words, is deformable. The elastic top layer may have a thickness of between 1 and 5 cm.

The cross section of the slot element can be omega-shaped (Ω). According to the invention, the slot element may be attached to the slatted floor at the location of the grid openings, and thereafter the elastic floor top layer may be laid on the slatted floor and the flange. The flange is then situated in between the slatted floor and the elastic floor top layer.

According to one embodiment, the top surface of the slot element is level with the walking surface of the elastic floor top layer. Alternatively, the top surface of the slot element is offset to the walking surface, so that the top surface and the walking surface are not level, with the top surface being lower or higher than the walking surface. An underside of the slot element faces the manure reservoir.

Optionally, the U profile has side legs that are downwardly directed from the top surface at opposite ends of the top surface, and the side legs of the U profile extend as far as into the grid opening and engage with a peripheral wall of the grid opening. In this embodiment, the side legs of the U profile are longer than a thickness of the elastic floor top layer, so that the side legs can engage with a peripheral edge or peripheral wall of the grid opening in the slatted floor.

According to a further embodiment, the U profile has side legs which are downwardly directed from the top surface at opposite ends of the top surface, and the side legs of the U profile extend as far as into the grid opening, and each side leg comprises at least one laterally projecting support element for fixing the slot element to the slatted floor. The support element may be panel-shaped. Preferably, the slatted floor comprises a gap at right angles to the grid opening with the support element being insertable in the gap.

In a further embodiment, the slot-shaped opening or slot opening of the elastic floor top layer is relatively greater in width and/or length than the grid opening, so that a part of the first floor surface is uncovered and forms a supporting surface for the slot element in the slot-shaped openings. If the slot opening of the elastic floor top layer is greater in width and/or length than the grid opening, a part of the first surface of the slatted floor is visible in top view as it is uncovered. This part may serve as a supporting surface for the support element.

In one embodiment, the slot element is relatively rigid with respect to the elastic floor top layer. The slot element and the elastic floor top layer thus form alternating rigid and elastic zones, respectively. As a result thereof, a comfortable walking surface for the animals is produced. The differences in flexibility of the more rigid and the elastic zones increases the grip for animals that walk on the animal shed floor, and reduces the danger of slipping. In addition, it is preferred if the walking surface and the top surface of the slot element have a different roughness, so that additional grip for animal legs is created.

An increased roughness of a floor may be produced by adding a texture to the walking surface in order thus to increase the surface roughness on a micro scale or meso scale. Alternatively, or in combination, the walking surface may be provided with indentations and/or protuberances. Preferably, the walking surface is provided with indentations that extend in a transverse direction with respect to the slot opening and end in the slot opening. In one embodiment, the top surface of the slot element is provided with grooves that extend on either side in a transverse direction from the hole and end in the hole. These indentations and/or grooves provide (further) increased roughness, as is the case with a shoe sole profile, and ensure an improved discharge of urine to the manure reservoir.

Preferably, the top surface of the slot element slopes towards the through-holes. In this embodiment, the top surface of the slot element comprises a depression, with the through-holes being situated in the depression. Preferably, the depression comprises a side wall which runs obliquely upwards and surrounds the one or more through-holes, wherein the obliquely upwardly running side wall of the depression forms an inclined part which connects a part of the top surface situated at a lower level and formed by the depression to a part of the top surface situated at a higher level.

Preferably, the elastic floor top layer comprises a plurality of elastic floor elements, such as tiles made of an elastic material, wherein at least one slot-shaped opening is provided in such an elastic floor element. By constructing the elastic floor top layer from a plurality of elastic floor elements, such as tiles, it is possible to replace worn or defective parts without having to replace the entire floor top layer. In addition, it is easier to adapt the floor top layer to the shape of the animal shed and the service face for the animals. The elastic floor elements are also easier to store and to transport from a production site to a site where they are to be used than an integral elastic floor top layer.

Preferably, the slot element fixes the elastic floor top layer laterally with respect to the slatted floor. The fixation is in the lateral direction, that is to say in the plane of the slatted floor. The elastic floor top layer is then prevented from moving in the horizontal direction. When the slot element is attached to the slatted floor and/or engages with the slatted floor, the slot element forms a fixing point for the elastic floor top layer, in particular for the individual elastic floor elements as described above.

In one embodiment, the slot element is releasably inserted into the slot opening. The attachment of the slot element to and/or its engagement with the slatted floor may be coupled with the releasability of the slot element. For example, if releasable mechanical fastening means, such as bolts, are used or if the engagement force of the slot element on the slatted floor can be overcome by a removal means, such as a hook or another tool. The releasability may be advantageous for renovation or repair of the animal-shed floor, or replacement of a defect slot element.

In one embodiment, the dimensions of the slot element correspond to those of the slot-shaped opening of the elastic floor top layer, so that the slot element is form-fitted in the slot-shaped opening. The form fit ensures that any possible gaps between the top layer and the slot element are prevented or are at least kept as small as possible, so that the discharge of urine takes place via the holes in the slot element. Such gaps may also cause faeces to accumulate and/or stick to the animal-shed floor.

In a further embodiment, the plurality of holes are arranged in a pattern across the top surface of the slot element. Because the slot element falls over the grid opening, the through-holes are aligned with the grid openings. The pattern may be arbitrary, linear, circular, square, a grid pattern or any other kind of pattern.

It is preferable if the number of through-holes in the floor is between 20 and 50 through-holes per square metre, more preferably between 20 and 35 through-holes per square metre, in particular approximately 20 to 30 through-holes per square metre. The number of through-holes may also be calculated as the square millimetres of passage area for urine and air per square metre of floor surface. The number of through-holes has to be, for example, 1,000 to 2,000 square millimetres per square metre of floor, preferably between 1,300 and 1,700 square millimetres per square metre of floor, more preferably approximately 1,500 to 1,600 square millimetres per square metre of floor. The number of through-holes, either as an absolute figure per square metre of floor or corresponding to the passage area per square metre of floor, would be sufficient to maintain the pressure difference between the animal shed above the floor and the reservoir under the floor.

Preferably, the opening of the through-hole has a diameter or a smallest size of between 5 and 10 millimetres (mm). It is advantageous if the hole is round and has a diameter of between 5.0 and 10 mm, preferably between 7.5 and 8.5 mm. It has been determined experimentally that a hole or opening of such dimensions, on the one hand, makes it possible for urine to pass through quickly and, on the other hand, is sufficiently small to prevent faeces from passing through.

The invention furthermore relates to an animal shed comprising an animal-shed floor as described above. The animal shed furthermore comprises a reservoir situated under the animal-shed floor, with the through-holes and the grid openings allowing the flow of liquid from the walking surface to the reservoir.

In addition, the invention relates to an animal-shed system, comprising:
- an animal shed with an animal-shed floor or an animal-shed floor as described above;
- a manure reservoir situated underneath, wherein the through-holes allow the flow of fluid from the animal shed to the reservoir, and
- an air extraction device for extracting ammonia-containing air from under the floor, from the reservoir, wherein the air extraction system under the floor creates a subatmospheric pressure with respect to the pressure above the floor.

The animal-shed floor allows urine and air to flow from the animal shed to the reservoir via the through-holes in the slot element and the grid openings of the slatted floor. The air extraction device, in particular a ventilator, reduces the air pressure in the reservoir, so that air is sucked in form the animal room or animal shed above the animal-shed floor. This results in an additional reduction of emissions to the environment. In addition, the airflow above the animal-shed floor accelerates the flow of urine through the holes.

In particular, the animal-shed system comprises an air scrubber that is connected to the air extraction device in order to capture the ammonia that is present in the extracted air. The air scrubber or gas scrubber may contain an acid solution, such as sulphuric acid, nitrous acid or citric acid.

The air over the liquid layer, which will usually mainly consist of urine, has a high ammonia content. By forcing the air from the reservoir through an air scrubber, which is known per se, the ammonia is bound in the acid solution of the gas scrubber. It has been found experimentally that a particularly advantageous effect is obtained if the air extraction device produces a pressure under the floor that is subatmospheric compared to the pressure above the floor, wherein the pressure difference is between 0.3 mbar and 1.0 mbar. The air extraction device thus produces a subatmospheric pressure under the floor, having a pressure that is lower than the atmospheric pressure. The pressure under the floor is preferably 0.3 to 1.0 mbar lower than the atmospheric pressure prevailing above the floor. The animal-shed system may furthermore comprise a manure removal vehicle for the removal of manure or faeces from the animal-shed floor. Due to the fact that the urine flows through the animal-shed floor via the through-holes of the floor top layer and the slot openings of the slatted floor, the faeces remain largely on the walking surface of the animal-shed floor. The manure removal vehicle can remove the faeces in order to keep the animal-shed floor clean and to prevent the faeces from blocking the through-holes of the floor top layer. The manure removal vehicle may be a movable manure removal vehicle, such as a manure robot, or a manure slide.

### BRIEF DESCRIPTION OF THE FIGURES

Figure 1 diagrammatically shows an animal-shed system for animals according to the invention.
Figure 2 diagrammatically shows an animal-shed floor according to the invention.
Figure 3 diagrammatically shows an animal-shed floor comprising different embodiments of a slot element.
Figure 4 shows a top view of an animal-shed floor according to the invention.

### DETAILED DESCRIPTION OF THE INVENTION

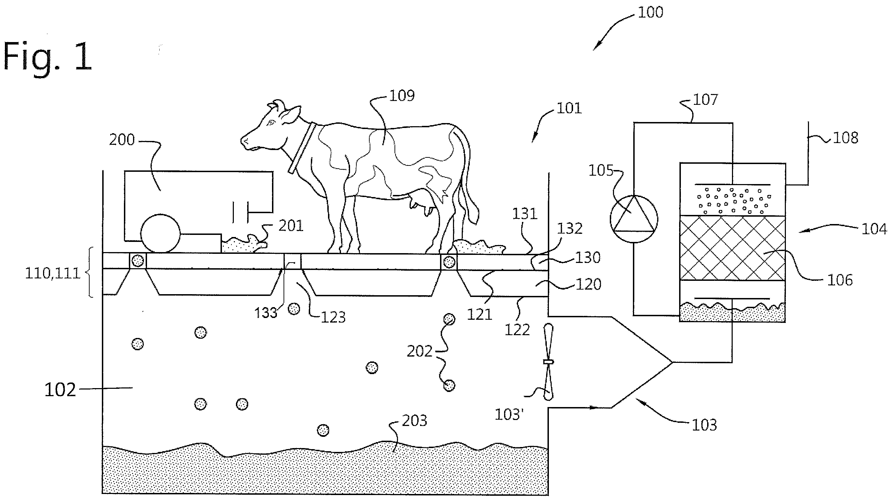

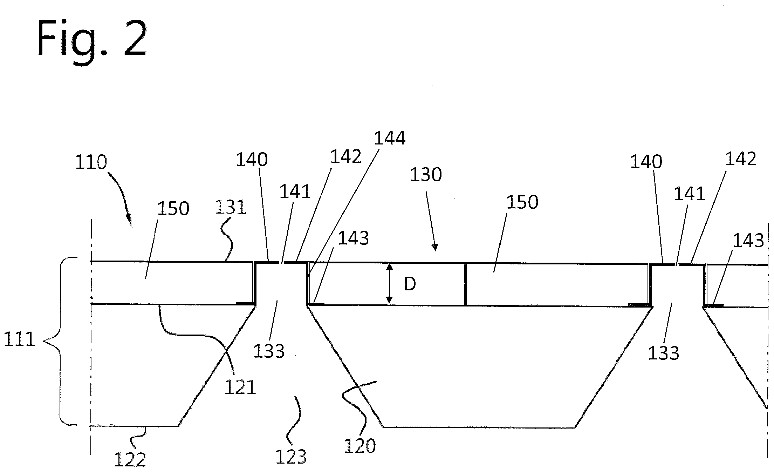

Figure 1 diagrammatically shows an animal-shed system 100, comprising a floor 110 for an animal room or animal shed 101. The floor 110 comprises an assembly 111 of a slatted floor 120 and an elastic floor top layer 130. The floor top layer 130 has a first surface, the walking surface 131, an opposite second surface 132 and a plurality of slot-shaped openings or slot openings 133 which end in a reservoir 102 situated underneath, for example a manure cellar. The slot openings 133 are provided with slot elements 140. The walking surface 131 and the second surface 132 are spaced apart, so that the floor top layer 130 has a thickness D, see Figure 2. The floor top layer 130 covers the slatted floor 120, that is to say is situated on top of the slatted floor 120. The slatted floor 120 has a first floor surface 121 and a second floor surface 122, and a plurality of slot-shaped grid openings 123 opening out on the reservoir 102 situated underneath. The second surface 132 faces the first floor surface 121. In the illustrated embodiments, the second surface 132 and the first floor surface 121 adjoin each other. The slot element 140 has a top surface 142 with a through-hole 141. The top surface 142 is level with the first surface 131. Together, the top surface 142 and the first surface or the walking surface 131 form the walking surface of the animal-shed floor 110. Urine 202 will flow through the through-hole 141 to the reservoir 102 under the floor 110 via the slot opening 133 and the grid openings 123. The through-hole 141 is formed in such a way that faeces 201 cannot pass through and will remain behind on the walking surface 131 or top surface 142. The slot openings 133 in the elastic floor top layer 130 are aligned with respect to the grid openings 123, so that each slot opening 133 coincides with a grid opening 123, as can also be seen in Fig. 1. The slot openings 133 and the grid openings are identical in shape, although their dimensions may deviate, and congruent in a number of embodiments, in which the dimensions and shape are identical.

The system 100 furthermore comprises an air extraction device 103, in particular a ventilator 103', under the assembly 110 for extracting air. The system 100 furthermore comprises an air scrubber 104 that is connected to the air extraction device 103 in order to capture ammonia present in the extracted air. The ventilator 103' provides a subatmospheric pressure of approximately 0.7 mbar, which is the difference between the prevailing air pressure in the animal room 101 and the lower pressure in the manure cellar 102 situated under the animal-shed floor 110. Because the holes 141 are relatively small and the free space under the shed floor 110 is relatively large, the subatmospheric pressure will be relatively constant in this free space, considering the entire space. In other words, the pressure gradient in the direction of the ventilator 103' is small. The air scrubber 104 is designed as a packed-bed wash column 106. A pump 105 underneath the wash column 106 pumps acid-absorbing liquid in the form of diluted sulphuric acid or diluted nitrous acid to a sprayer 107 above the wash column 106. The -rich air which is extracted by the ventilator 103' is passed through the wash column 106 in countercurrent and flows upwards in countercurrent with the absorbing liquid. The absorbing liquid absorbs, inter alia, the ammonia and renders it soluble as ammonium. The air is passed to the outside environment in purified form via an exhaust 108. The packed bed in the wash column 106 may be made up of different kinds of fillers and serves to enlarge the contact surface of the absorbing liquid with the air to be purified. The air scrubber 104 may also be of a crosscurrent design, with the air flow being passed through the packed bed in the horizontal direction. The air scrubber 104 may also be designed to comprise a fabric over which the absorption liquid runs and through which the air to be scrubbed is passed in crosscurrent.

As time goes by, the amount of ammonia dissolved in the absorption agent causes an increase in the pH value, so that the absorption agent has to be replaced. The resulting saturated and still slightly acidic absorption liquid is a nitrogen-containing fertilizer, also referred to as washing water. In an embodiment that is not shown, the air scrubber comprises an acid-dosing system in order to be able to keep the pH value of the absorption liquid constant. In addition to ammonia, it is also possible to pass water vapour from the manure cellar 102 through the air scrubber 104 and to be discharged. This results in a thickening of the liquid in the manure cellar 102. This liquid is rich in salts; in particular potassium salts, and is therefore a good potassium fertilizer.

An autonomous, self-propelled manure robot 200 moves across the floor 110 between the animals 109, that is to say on the walking surface. This robot 200 removes solid faeces 201 which largely remain behind on the surface of the floor 110, and subsequently dumps the faeces in a separate space (not shown). In an embodiment (not shown), the faeces 201 are removed by means of a pulled manure slide. The collected faeces 201 can be processed further by, for example, drying or pressing, in the course of which manure fibres are removed from the faeces 201. Contact between faeces 201 and urine 202 causes an enzymatic conversion reaction of urea in the urine 202 to ammonia. By regularly cleaning the animal-shed floor 110, for example every hour, the faeces 201 do not have the chance, or in any case a reduced chance, of reacting with the urine 202. By using a manure robot 200 for this purpose, the faeces 201 are removed from the floor 110 in situ. The faeces 201 are not spread across the floor, which could otherwise quickly result in blocking of the holes 141. Because the faeces 201 are not completely mixed with the urine 202, nearly all the phosphate remains in the faeces and the percentage of solids is relatively high. Ultimately, the excretory products (faeces 201 and urine 202) of a farm animal are separated into three parts in a relatively simple way in the animal room 101: phosphate-rich solid faeces with a high organic content, a potassium-rich liquid and a nitrogen-rich liquid. These parts may be used for specific fertilizing processes and have a value which is higher than that of the slurry which usually results when faeces 201 and urine 202 are poured into a manure cellar together. In order to ensure that the urine 202 and faeces 201 are separated and, in addition, that the ventilator 103' generates a subatmospheric pressure in the reservoir 102, a plurality of through-holes 141 are required in the floor 110.

The floor top layer 130 of the animal-shed system 100 illustrated in Fig. 1 comprises at least one floor top-layer element 150. The floor top layer 130 may thus consist of one single floor top-layer element 150 (i.e. made as a single piece, if desired rolled out like a rug in the animal shed 101), or a plurality of floor top-layer elements or floor elements 150 which form the floor top layer 130. The latter situation is the preferred embodiment of the floor top layer 130. The floor top-layer element 150 and also the floor top layer 130 have one or more slot openings 133 which are aligned with the grid openings 123 of the slatted floor 120 and thus open into the reservoir 102 under the floor 110, as is illustrated in Figures 1, 2 and 3. The floor top layer 130, and therefore the floor top-layer element 150, has a walking surface 131 and a second surface 132. The walking surface 131 and the top surface 142 of the slot elements 140 together form the walking surface of the floor top layer 130, and of the floor 110 in general, that is to say the animals 109 in the animal shed walk on the walking surface 131 when the floor top layer 130 or floor 110 is in use. The second surface 132 faces the slatted floor 120. The slot openings 133 extend from the walking surface 131 to the second surface 132.

Figure 2 shows an animal-shed floor 110 which is an assembly 111 of a slatted floor 120 and a floor top layer 130. The slatted floor comprises a first floor surface 121 and a second floor surface 122. Grid openings 123 extend through the slatted floor from the first floor surface 121 to the second floor surface 122. The slatted floor 120 is covered by the floor top layer 130. The floor top layer 130 has a first surface, the walking surface 131, and a second surface 132, between which a slot-shaped opening or slot opening 133 extends. The slot opening 133 is aligned with the grid opening 123. A slot element 140 is provided in the slot opening 133. The slot element 140 is form-fitted with at least the floor top layer 130, so that any space or slit between the slot element 140 and the floor top layer 130 is relatively small and accumulation of faeces is prevented, or at least reduced.

In Figure 2, the slot element 140 is formed in such a way that the cross section resembles an omega (Ω). The top surface 142 has two opposite ends. On each of the ends of the top surface 142, a leg 144 extends into the slot opening 140, in the direction of the grid opening 123. A flange 143 extends from each leg 144, the flanges 143 being directed away from one another. The flange 143 is situated between the slatted floor 120 and the elastic floor top layer 130. The flange 143 may be attached to the first floor surface 121 by means of a mechanical fastening means, such as a bolt, or a bonding agent, such as glue or sealant.

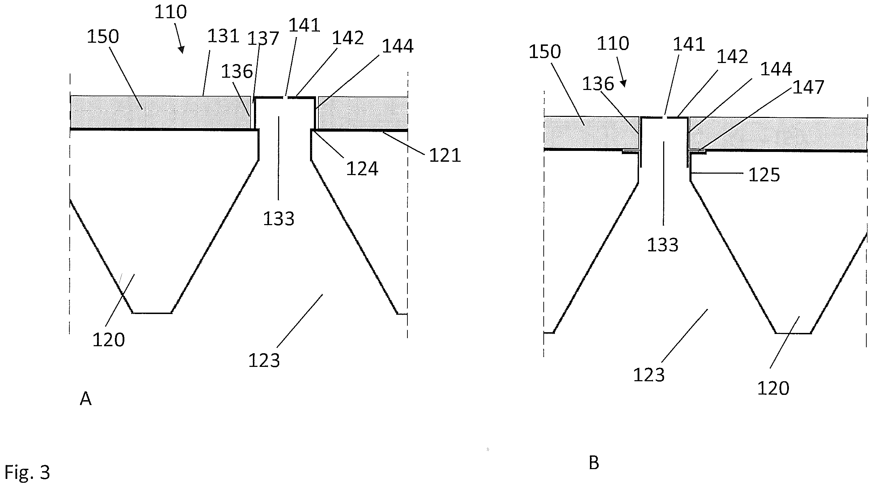

Figure 3 shows various other embodiments of a slot element 140. In a non claimed embodiment, figure 3A shows the slatted floor 120 and the elastic floor top layer 130. The slot element 140 is provided in the slot opening 133. The slot opening 133 is wider than the grid opening 123. As a result thereof, the first floor surface 121 adjacent to the grid opening 123 forms a supporting surface 124 for the side legs 144 of the slot element 140. The slot opening 133 may also be larger than the grid opening 123 in a length direction, so that the supporting surface 124 is provided around the grid opening 123.

Figure 3B shows the slot element 140 in which the side legs 144 are extended and extend from the top surface 142 as far as into the grid opening 123. Each side leg 144 is provided with a laterally projecting support element 147 for fixing the slot element 140 to the slatted floor 120. Here, the support element 147 is depicted as being panel-shaped. The slatted floor 120 comprises a support groove 126 which is arranged transversely to the grid opening 123. The support groove 126 is formed in such a way that the support element 147 fits into it. Preferably, the form of the support groove is identical to the form of the support element, so that a form fit is achieved. In this embodiment, the slot element 140 is form-fitted with both the slot opening 133 and the grid opening 123, so that accumulation of faeces between the slot element 140 and the floor top layer 130 is minimized.

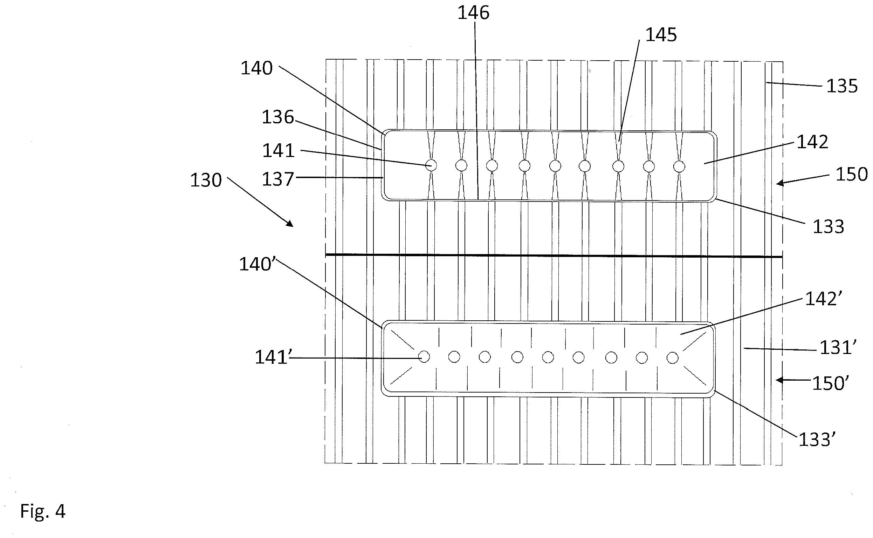

Figure 4 shows a top view of an animal-shed floor 110 according to the invention. The top view shows the walking surface 131 of the floor top layer 130 and the top surface 142 of the slot elements 140. The floor top layer 130 consists of two floor top-layer elements or floor elements 150, 150' and a variant of the slot element 140, 140' is provided in each of the floor elements 150.

In the top surface 142 of the first slot element 140, grooves 145 are provided, each of which ends in a hole 141. Grooves 145 extend from the through-holes 141 to a peripheral edge 146 of the slot element 140. The grooves 145 may be level with indentations 135 which are provided in the walking surface 131 of the floor top layer 130, or may at least be partly level. The indentations 135 extend in a direction transverse to the longitudinal direction of the slot openings 133, but may also be parallel thereto. At least on one side, the indentations 135 open into the slot opening 133. The depth of the indentations 135 is equal to or smaller than the depth of the grooves 145 in the top surface 142 of the slot element 140, so that a flow of fluid does not accumulate on the peripheral edge 146 of the slot element.

The second slot element 140' is provided in the slot opening 133' of the second floor top-layer element 150'. The top surface 142' of the second slot element 140' runs off on all sides to the through-holes 141' at an angle, so that the through-holes 141' are in a depression. The oblique sides of the top surface 142' provide an improved flow of fluid over the top surface 142' to the through-holes 141'.

Figures 3 and 4 furthermore illustrate a slit 137 between the peripheral edge 146 of the slot element 140 and a peripheral edge 136 of the slot opening 133. This slit 137 is relatively small due to the form fit of the slot element 140 in the slot opening, which prevents, or at least reduces, the accumulation of faeces and other dirt between the slot element 140 and the elastic floor top layer 130.

Although the invention was explained above with reference to the drawings, it should be noted that the invention is by no means limited to the embodiment illustrated in the drawings. The invention also covers all the embodiments which differ from the embodiment illustrated in the drawings within the scope defined by claims.

**LIST OF COMPONENTS**

| | | | |
|---|---|---|---|
| 100. | Animal-shed system | 140. | Slot element |
| 101. | Animal shed | 141. | Through-hole |
| 102. | Manure cellar or reservoir | 142. | Top surface |
| 103. | Air extraction device | 143. | Flange |
| 103'. | Ventilator | 144. | Side legs |
| 104. | Air scrubber / scrubber | 145. | Groove |
| 105. | Pump | 146. | Peripheral edge |
| 106. | Wash column | 147. | Support element |
| 107. | Sprayer | | |
| 108. | Exhaust | 150. | Floor element |
| 109. | Animal (cow) | | |
| 110. | Animal-shed floor | 200. | Manure suction robot |
| 111. | Assembly | 201. | Faeces |
| | | 202. | Urine |
| 120. | Slatted floor | 203. | Manure |
| 121. | First floor surface | | |
| 122. | Second floor surface | | |
| 123. | Grid opening | | |
| 124. | Supporting surface | | |
| 125. | Peripheral wall | | |
| 126. | Support groove | | |
| 130. | Floor top layer | | |
| 131. | Walking surface | | |
| 132. | Second surface | | |
| 133. | Slot opening | | |
| 135. | Indentation | | |
| 136. | Peripheral edge | | |
| 137. | Slit | | |

## Claims

1. Animal-shed floor (110) comprising an assembly (111) of:
- a slatted floor (120) with a first floor surface (121) and an opposite second floor surface (122), wherein the second floor surface faces a manure reservoir (102) situated underneath, and with a plurality of slot-shaped grid openings (123) which open towards the manure reservoir situated underneath; and
- an elastic floor top layer (130) with a first surface (131) and an opposite second surface (132) arranged at a distance, wherein the first surface is a walking surface for animals (109) and the second surface faces the first floor surface,
wherein the elastic floor top layer furthermore comprises a plurality of slot-shaped openings (133) which extend from the walking surface to the second surface, and open towards the slot-shaped grid openings, wherein a slot element (140) is provided in the slot-shaped openings of the elastic floor top layer, wherein a top surface (142) of the slot element is provided with one or more through-holes (141) which are relatively small compared to the grid openings and the slot-shaped openings of the elastic floor top layer, so that urine (202) flows through the through-holes to the manure reservoir and faeces (201) remain behind on the first surface when the animal-shed floor is in use,
**characterised in that**
the slot element comprises a U profile with side legs (144) which are downwardly directed from the top surface at opposite ends of the top surface, wherein a flange (143) is provided on each of the side legs and the flanges face away from each other, in such a manner that each flange is situated between the elastic floor top layer and the slatted floor.

2. Animal-shed floor according to Claim 1, wherein the top surface of the slot element is situated lower than the walking surface of the elastic floor top layer and higher than the first floor surface of the slatted floor.

3. Animal-shed floor according to Claim 1 or 2, wherein the slot element comprises a U profile with side legs (144) which are downwardly directed from the top surface at opposite ends of the top surface, wherein the side legs of the U profile extend as far as into the grid opening, wherein
(a) the side legs engage with a peripheral wall (125) of the grid opening, or
(b) each side leg comprises at least one laterally projecting support element for fixing the slot element to the slatted floor, or
(c) the slot-shaped opening of the elastic floor top layer is relatively greater in width and/or length than the grid opening, so that a part of the first floor surface is uncovered and forms a supporting surface (124) for the slot element in the slot-shaped openings.

4. Animal-shed floor according to one of the preceding claims, wherein the walking surface of the floor top layer and the top surface of the slot element have a different roughness and/or wherein the slot element is relatively rigid with respect to the elastic floor top layer.

5. Animal-shed floor according to one of the preceding claims, wherein the top surface of the slot element is provided with grooves (145) which extend on either side in a transverse direction from the through-hole and end in the hole and/or wherein the walking surface is provided with indentations (135) which extend in a transverse direction with respect to the slot opening and end in the slot opening.

6. Animal-shed floor according to one of the preceding claims, wherein the elastic floor top layer comprises a plurality of elastic floor elements (150, 150'), such as tiles made of an elastic material, wherein at least one slot opening is provided in such an elastic floor element.

7. Animal-shed floor according to one of the preceding claims, wherein the slot element fixes the elastic floor top layer laterally with respect to the slatted floor.

8. Animal-shed floor according to one of the preceding claims, wherein the slot element is releasably inserted into the slot opening.

9. Animal-shed floor according to one of the preceding claims, wherein the top surface of the slot element runs off towards the through-holes at an angle.

10. Animal-shed floor according to one of the preceding claims, wherein the dimensions of the slot element correspond to those of the slot-shaped opening of the elastic floor top layer, so that the slot element is form-fitted in the slot-shaped opening.

11. Animal-shed floor according to one of the preceding claims, wherein the plurality of holes are arranged in a pattern across the top surface of the slot element.

12. Animal shed (101) comprising an animal-shed floor (110) according to one of the preceding claims, comprising a manure reservoir (102) situated underneath, wherein the through-holes allow the flow of fluid from the animal shed to the reservoir.

13. Animal-shed system (100) comprising:
- an animal-shed floor (110) according to one of Claims 1-11, or an animal shed (101) according to claim 12, wherein the animal-shed system furthermore comprises:
- a manure reservoir (102) situated underneath, wherein the through-holes allow the flow of fluid from the animal shed to the reservoir, and
- an air extraction device (103) for extracting ammonia-containing air from under the floor, from the reservoir, wherein the air extraction system under the floor creates a subatmospheric pressure with respect to the pressure above the floor.

14. System according to Claim 13, comprising an air scrubber (104) which is connected to the air extraction device to capture ammonia which is present in the extracted air.

## Patentansprüche

1. Stallboden (110), umfassend eine Anordnung (111), die Folgendes umfasst:
- einen Spaltenboden (120) mit einer ersten Bodenoberfläche (121) und einer gegenüberliegenden zweiten Bodenoberfläche (122), wobei die zweite Bodenoberfläche einem darunterliegenden Güllebehälter (102) zugewandt ist, und mit mehreren schlitzförmigen Gitteröffnungen (123), die sich zum darunterliegenden Güllebehälter hin öffnen; und
- eine elastische Bodenoberschicht (130) mit einer ersten Oberfläche (131) und einer gegenüberliegenden zweiten Oberfläche (132), die in einem Abstand angeordnet sind, wobei die erste Oberfläche eine Lauffläche für Tiere (109) ist und die zweite Oberfläche der ersten Bodenoberfläche zugewandt ist,
wobei die elastische Bodenoberschicht ferner mehrere schlitzförmige Öffnungen (133) umfasst, die sich von der Lauffläche zu der zweiten Oberfläche erstrecken und sich zu den schlitzförmigen Gitteröffnungen hin öffnen, wobei ein Schlitzelement (140) in den schlitzförmigen Öffnungen der elastischen Bodenoberschicht bereitgestellt ist, wobei eine obere Oberfläche (142) des Schlitzelements mit einem oder mehreren Durchgangslöchern (141) versehen ist, die im Vergleich zu den Gitteröffnungen und den schlitzförmigen Öffnungen der elastischen Bodenoberschicht relativ klein sind, so dass Urin (202) durch die Durchgangslöcher zum Güllebehälter fließt und Fäkalien (201) auf der ersten Oberfläche zurückbleiben, wenn der Stallboden in Gebrauch ist,
**dadurch gekennzeichnet, dass** das Schlitzelement ein U-Profil mit seitlichen Schenkeln (144) aufweist, die von der oberen Oberfläche an gegenüberliegenden Enden der oberen Oberfläche nach unten gerichtet sind, wobei an jedem der seitlichen Schenkel ein Flansch (143) bereitgestellt ist und die Flansche voneinander abgewandt sind, derart, dass sich jeder Flansch zwischen der elastischen Bodenoberschicht und dem Spaltenboden befindet.

2. Stallboden nach Anspruch 1, wobei die obere Oberfläche des Schlitzelements niedriger als die Lauffläche der elastischen Bodenoberschicht und höher als die erste Bodenoberfläche des Spaltenbodens liegt.

3. Stallboden nach Anspruch 1 oder 2, wobei das Schlitzelement ein U-Profil mit seitlichen Schenkeln (144) umfasst, die von der oberen Oberfläche an gegenüberliegenden Enden der oberen Oberfläche nach unten gerichtet sind, wobei sich die seitlichen Schenkel des U-Profils bis in die Gitteröffnung erstrecken, wobei
(a) die seitlichen Schenkel in Eingriff mit einer umlaufenden Wand (125) der Gitteröffnung sind, oder
(b) jeder seitliche Schenkel mindestens ein seitlich vorstehendes Stützelement zur Befestigung des Schlitzelements am Spaltenboden umfasst, oder
(c) die schlitzförmige Öffnung der elastischen Bodenoberschicht in ihrer Breite und/oder Länge relativ größer als die Gitteröffnung ist, sodass ein Teil der ersten Bodenoberfläche freigelegt ist und eine Auflagefläche (124) für das Schlitzelement in den schlitzförmigen Öffnungen bildet.

4. Stallboden nach einem der vorhergehenden Ansprüche, wobei die Lauffläche der Bodenoberschicht und die obere Oberfläche des Schlitzelements eine unterschiedliche Rauigkeit aufweisen und/oder wobei das Schlitzelement relativ steif gegenüber der elastischen Bodenoberschicht ist.

5. Stallboden nach einem der vorhergehenden Ansprüche, wobei die obere Oberfläche des Schlitzelements mit Nuten (145) versehen ist, die sich auf beiden Seiten in einer Querrichtung vom Durchgangsloch erstrecken und in dem Loch enden, und/oder wobei die Lauffläche mit Vertiefungen (135) versehen ist, die sich in einer Querrichtung zur Schlitzöffnung erstrecken und in der Schlitzöffnung enden.

6. Stallboden nach einem der vorhergehenden Ansprüche, wobei die elastische Bodenoberschicht mehrere elastische Bodenelemente (150, 150') umfasst, wie etwa Fliesen aus einem elastischen Material, wobei in einem solchen elastischen Bodenelement mindestens eine Schlitzöffnung vorgesehen ist.

7. Stallboden nach einem der vorhergehenden Ansprüche, wobei das Schlitzelement die elastische Bodenoberschicht seitlich bezüglich des Spaltenbodens fixiert.

8. Stallboden nach einem der vorhergehenden Ansprüche, wobei das Schlitzelement lösbar in die Schlitzöffnung eingesetzt ist.

9. Stallboden nach einem der vorhergehenden Ansprüche, wobei die obere Oberfläche des Schlitzelements in einem Winkel zu den Durchgangslöchern abläuft.

10. Stallboden nach einem der vorhergehenden Ansprüche, wobei die Abmessungen des Schlitzelements denen der schlitzförmigen Öffnung der elastischen Bodenoberschicht entsprechen, sodass das Schlitzelement in der schlitzförmigen Öffnung formschlüssig eingepasst ist.

11. Stallboden nach einem der vorhergehenden Ansprüche, wobei die mehreren Löcher in einem Muster über die obere Oberfläche des Schlitzelements angeordnet sind.

12. Stall (101), umfassend einen Stallboden (110) nach einem der vorhergehenden Ansprüche, umfassend einen darunter befindlichen Güllebehälter (102), wobei die Durchgangslöcher den Fluss von Flüssigkeit vom Stall zum Behälter ermöglichen.

13. Stallsystem (100), das Folgendes umfasst:
- einen Stallboden (110) nach einem der Ansprüche 1-11 oder einen Stall (101) nach Anspruch 12, wobei das Stallsystem ferner Folgendes umfasst:
- einen darunter liegenden Güllebehälter (102), wobei die Durchgangslöcher den Fluss von Flüssigkeit vom Stall zum Behälter ermöglichen, und
- eine Luftabsaugvorrichtung (103) zum Absaugen von ammoniakhaltiger Luft von unter dem Boden aus dem Behälter, wobei das Luftabsaugsystem unter dem Boden einen Unterdruck in Bezug auf den Druck über dem Boden erzeugt.

14. System nach Anspruch 13, umfassend einen Luftwäscher (104), der mit der Luftabsaugvorrichtung verbunden ist, um in der abgesaugten Luft vorhandenes Ammoniak aufzufangen.

## Revendications

1. Plancher d'étable (110) comprenant un ensemble (111) comportant :
- un plancher à caillebotis (120) doté d'une première surface de plancher (121) et d'une seconde surface de plancher opposée (122), la seconde surface de plancher faisant face à un réservoir de fumier (102) situé en dessous, et doté d'une pluralité d'ouvertures de grille en forme de fente (123) qui s'ouvrent vers le réservoir de fumier situé en dessous ; et
- une couche supérieure de plancher élastique (130) dotée d'une première surface (131) et d'une seconde surface opposée (132) disposées à distance, la première surface étant une surface de marche pour les animaux (109) et la seconde surface faisant face à la première surface de plancher,
la couche supérieure de plancher élastique comprenant en outre une pluralité d'ouvertures en forme de fente (133) qui s'étendent de la surface de marche à la seconde surface et s'ouvrent vers les ouvertures en forme de grille, un élément de fente (140) étant situé dans les ouvertures en forme de fente de la couche supérieure de plancher élastique, une surface supérieure (142) de l'élément de fente étant pourvue d'un ou de plusieurs trous traversants (141) qui sont relativement petits par rapport aux ouvertures de grille et aux ouvertures en forme de fente de la couche supérieure de plancher élastique, de sorte que l'urine (202) s'écoule à travers les trous traversants jusqu'au réservoir de fumier et que les fèces (201) restent sur la première surface lorsque le plancher de l'étable est en cours d'utilisation,
**caractérisé en ce que** l'élément de fente comprend un profilé en U doté de pieds latéraux (144) qui sont dirigés vers le bas à partir de la surface supérieure au niveau d'extrémités opposées de la surface supérieure, une bride (143) étant située sur chacun des pieds latéraux et les brides étant opposées l'une à l'autre, de sorte que chaque bride soit située entre la couche supérieure de plancher élastique et le plancher à caillebotis.

2. Plancher d'étable selon la revendication 1, la surface supérieure de l'élément de fente étant située plus bas que la surface de marche de la couche supérieure de plancher élastique et plus haut que la première surface de plancher du plancher à caillebotis.

3. Plancher d'étable selon la revendication 1 ou 2, l'élément de fente comprenant un profilé en U doté de pieds latéraux (144) qui sont dirigés vers le bas à partir de la surface supérieure au niveau d'extrémités opposées de la surface supérieure, les pieds latéraux du profilé en U s'étendant jusqu'à l'intérieur de l'ouverture de grille,
(a) les pieds latéraux venant en prise avec une paroi périphérique (125) de l'ouverture de grille, ou
(b) chaque pied latéral comprenant au moins un élément de support faisant saillie latéralement pour fixer l'élément de fente au plancher à caillebotis, ou
(c) l'ouverture en forme de fente de la couche supérieure de plancher élastique étant relativement plus large et/ou plus longue que l'ouverture de grille, de sorte qu'une partie de la première surface de plancher soit découverte et forme une surface de support (124) pour l'élément de fente dans les ouvertures en forme de fente.

4. Plancher d'étable selon l'une quelconque des revendications précédentes, la surface de marche de la couche supérieure de plancher et la surface supérieure de l'élément de fente ayant une rugosité différente et/ou l'élément de fente étant relativement rigide par rapport à la couche supérieure de plancher élastique.

5. Plancher d'étable selon l'une quelconque des revendications précédentes, la surface supérieure de l'élément de fente étant pourvue de rainures (145) qui s'étendent de chaque côté dans une direction transversale à partir du trou traversant et se terminent dans le trou et/ou la surface de marche étant pourvue d'indentations (135) qui s'étendent dans une direction transversale par rapport à l'ouverture de fente et se terminent dans l'ouverture de fente.

6. Plancher d'étable selon l'une quelconque des revendications précédentes, la couche supérieure de plancher élastique comprenant une pluralité d'éléments de plancher élastiques (150, 150'), tels que des dalles en un matériau élastique, au moins une ouverture de fente étant située dans un tel élément de plancher élastique.

7. Plancher d'étable selon l'une quelconque des revendications précédentes, l'élément de fente fixant latéralement la couche supérieure de plancher élastique par rapport au plancher à caillebotis.

8. Plancher d'étable selon l'une quelconque des revendications précédentes, l'élément de fente étant inséré de manière amovible dans l'ouverture de fente.

9. Plancher d'étable selon l'une quelconque des revendications précédentes, la surface supérieure de l'élément de fente étant inclinée vers les trous traversants.

10. Plancher d'étable selon l'une quelconque des revendications précédentes, les dimensions de l'élément de fente correspondant à celles de l'ouverture en forme de fente de la couche supérieure de plancher élastique, de sorte que l'élément de fente soit ajusté dans l'ouverture en forme de fente.

11. Plancher d'étable selon l'une quelconque des revendications précédentes, la pluralité de trous étant disposée selon un motif sur la surface supérieure de l'élément de fente.

12. Étable (101) comprenant un plancher d'étable (110) selon l'une quelconque des revendications précédentes, comprenant un réservoir de fumier (102) situé en dessous, les trous traversants permettant l'écoulement de fluide de l'étable jusqu'au réservoir.

13. Système d'étable (100) comprenant :
- un plancher d'étable (110) selon l'une quelconque des revendications 1 à 11, ou une étable (101) selon la revendication 12, le système d'étable comprenant en outre :
- un réservoir de fumier (102) situé en dessous, les trous traversants permettant l'écoulement de fluide de l'étable jusqu'au réservoir, et
- un dispositif d'extraction d'air (103) pour extraire l'air contenant de l'ammoniac sous le plancher, à partir du réservoir, le système d'extraction d'air sous le plancher créant une pression subatmosphérique par rapport à la pression au-dessus du plancher.

14. Système selon la revendication 13, comprenant un épurateur d'air (104) qui est raccordé au dispositif d'extraction d'air pour capturer l'ammoniac qui est présent dans l'air extrait.
